# EUROPÄISCHE PATENTSCHRIFT

(11) **EP 2 334 511 B1**
(45) Veröffentlichungstag und Bekanntmachung des Hinweises auf die Patenterteilung: **07.08.2013**
(21) Anmeldenummer: 09776874.1
(22) Anmeldetag: 29.06.2009
(51) Int. Cl.: B60P 3/22, B65D 90/10

(54) **VERSCHLUSSVORRICHTUNG FÜR EINE EINSTIEGSÖFFNUNG EINES ORTSBEWEGLICHEN KRAFTSTOFFTANKS**
CLOSURE DEVICE FOR AN ENTRY OPENING OF A PORTABLE FUEL TANK
DISPOSITIF DE FERMETURE POUR UNE OUVERTURE D'ENTRÉE D'UN RÉSERVOIR DE CARBURANT DÉPLAÇABLE

(30) Priorität: 24.09.2008 DE 202008013292 U
(43) Veröffentlichungstag der Anmeldung: 22.06.2011
(73) Patentinhaber: Saeta GmbH & Co. KG, 22880 Wedel (DE)
(72) Erfinder: HAAR, Thomas, 25469 Halstenbek (DE); DOBIRR, Manfred, 25336 Kleinnordende (DE); BÖRNCHEN, Thomas, 22587 Hamburg (DE); WITT, Florian, 22117 Hamburg (DE); HÜMPEL, Rolf, 22851 Norderstedt (DE)
(74) Vertreter: Hauck Patent- und Rechtsanwälte
(86) Internationale Anmeldenummer: PCT/EP2009/004680
(87) Internationale Veröffentlichungsnummer: WO 2010/034365

(56) Entgegenhaltungen:
- DE-A1-102005 019 676
- US-A- 3 344 947
- US-A- 4 181 238

## Beschreibung

Die vorliegende Erfindung betrifft eine Verschlussvorrichtung für eine Einstiegsöffnung eines ortsbeweglichen Kraftstofftanks, umfassend einen metallischen Domdeckel zum Verschließen der Einstiegsöffnung, ein Füllloch in dem Domdeckel zum Befüllen des Tanks, einen schwenkbar an dem Domdeckel gelagerten Druckarm, wobei an dem Druckarm ein metallischer Fülllochdeckel befestigt ist, und wobei der Druckarm zwischen einer Schließposition, in der der Fülllochdeckel das Füllloch verschließt, und einer Befüllposition, in der der Fülllochdeckel das Füllloch freigibt, verschwenkt werden kann, einen ebenfalls schwenkbar an dem Domdeckel gelagerten Spannarm, der bei in Schließposition befindlichem Druckarm in eine Spannposition verschwenkt werden kann, in der der Spannarm mit dem Druckarm verrastet und diesen so in der Schließposition hält, wobei der Druckarm und der Spannarm über gegenüberliegend auf dem Domdeckel befestigte Lagerböcke auf dem Domdeckel abgestützt sind, und eine umlaufende elastische Dichtung, die in der Schließposition des Druckarms einen Dichtsitz zwischen dem Rand des Fülllochdeckels und dem Füllloch bereitstellt.

Derartige ortsbewegliche Kraftstofftanks sind beispielsweise in Tankfahrzeugen vorgesehen, mit denen Tankstellen beliefert werden. Sie weisen mindestens eine Einstiegsöffnung auf, die zum Einstieg einer Person dient. Im Falle eines Unfalls, insbesondere eines Umstürzen des Fahrzeugs, muss die Dichtheit des Tanks weiter gewährleistet sein. Dazu ist ein Falltest nach den Normen EN 13314 (Fülllochdeckel) und EN 13317 (Domdeckel) vorgeschrieben, die an einem Baumuster nachzuweisen sind. Der Test soll einen kurzzeitigen Druckstoß durch die in dem Tank befindliche Flüssigkeit auf die Verschlussvorrichtung simulieren.

Weiterhin muss der Fülllochdeckel im Fall eines betriebsbedingten Überdrucks im Tankinneren beim Öffnen in einer Vorraststellung gehalten werden, um ein Aufschlagen zu verhindern. Der Fülllochdeckel kann grundsätzlich fest verschließend oder federnd verschließend sein, um eine Notentlüftung gemäß der Norm EN 14596 zu gewährleisten.

Bekannt sind Verschlusseinrichtungen mit Domdeckeln als Gussteil mit Versteifungsrippen. Diese bieten jedoch keine ausreichende Bruchdehnung und weisen außerdem ein hohes Gewicht auf. Weiter bekannt sind Verschlussvorrichtungen mit Domdeckeln aus Stahlblech mit angeschweißten Laschen für Druck- und Spannarme sowie Kragen. Sie besitzen jedoch eine unerwünscht große Bauhöhe und Gewicht. Auch ist eine Lösung realisiert, bei der der Füllochdeckel mittels Spanneinrichtung nach dem Kniehebelprinzip gegen den Domdeckel gedrückt wird und die unterseitige Versteifungselemente vorsieht, um den Dichtungsbereich für den Fülllochdeckel besonders formstabil auszubilden. Die Versteifungselemente sind z. B. verschraubte elliptische Blechringe (DE 10 2005 019 676 A1). Dies führt jedoch zu einer aufwendigen Herstellung und einem hohen Gewicht bzw. einer großen Bauhöhe.

Der Erfindung liegt die Aufgabe zugrunde, eine Verschlussvorrichtung der eingangs genannten Art beizustellen, die in einfach herstellbarer Weise und bei möglichst geringer Bauhöhe und geringem Gewicht die Anforderungen an die Betriebssicherheit jederzeit erfüllt.

Die Erfindung löst diese Aufgabe durch den Gegenstand von Anspruch 1. Vorteilhafte Ausgestaltungen finden sich in den abhängigen Ansprüchen, der Beschreibung sowie den Figuren.

Für eine Verschlussvorrichtung der eingangs genannten Art löst die Erfindung die Aufgabe durch die Merkmale im kennzeichnenden Teil des Anspruchs 1.

Erfindungsgemäß ist ein kleiner Spalt zwischen dem metallischen Fülllochdeckel und dem metallischen Domdeckel vorgesehen. Dabei kann eine Kontaktfläche, insbesondere der Winkel einer Kontaktfläche, zwischen dem Druckarm und dem Spannarm so gewählt werden, dass bei Auftreten eines von der Tankinnenseite auf die Verschlussvorrichtung wirkenden Druckstoßes ein Selbsthaltemoment des Spannarms in seine Spannposition bewirkt wird. Über diese Kontaktfläche wird ein Teil der bei einem Druckstoß auftretenden Kraft aus dem Druckarm in den Spannarm übertragen. Weiterhin wird bei Auftreten eines Druckstoßes eine aufgrund des Druckstoßes über den Fülllochdeckel auf den Druckarm und den Spannarm wirkende Kraft von diesen insbesondere über die Lagerböcke jeweils schräg nach außen von der Fülllochmitte weg (und nach unten) in den Domdeckel eingeleitet. Durch diese (beidseitige) schräge Kraftabführung nach außen wird eine möglichst große Ringzone um den Fülllochrand nicht kraftbelastet. Dadurch wiederum wird die Dichtwirkung des Fülllochdeckels jederzeit gewahrt. Die Kraft kann insbesondere im Wesentlichen entlang einer in einem Winkel von etwa 45° zu der Ebene des Fülllochs nach außen von der Fülllochmitte weg verlaufenden Hauptkraftableitungsrichtung (nach unten) in den Domdeckel abgeleitet werden. Weiterhin können die kraftführenden und kraftübertragenden Elemente, insbesondere also zumindest der Druckarm, der Spannarm sowie die Lagerböcke entlang der jeweiligen Kraftableitungsrichtung angeordnet sein.

Wie erläutert, besteht erfindungsgemäß bei einem Druckstoß von der Tankinnenseite eine relativ breite im Wesentlichen zugkraftfreie Ringzone um den Fülllochrand. Das Verhältnis des Außendurchmessers der zugkraftfreien Ringzone zu dem Durchmesser des Fülllochs kann dabei mindestens 1,2, vorzugsweise mehr als 1,3, betragen. Der Abstand des Zentrums der Krafteinleitung bei einem Druckstoß in den Domdeckel kann entsprechend 1,3 mal, vorzugsweise mehr als 1,4 mal größer sein als der Fülllochdurchmesser.

Erfindungsgemäß kann der Verlauf der Kraftführung aus dem Druckstoß also ausgehend von dem diese Kraft zuerst aufnehmenden Fülllochdeckel über den Druckarm bzw. den Spannarm und den jeweiligen Lagerbock in den Domdeckel also im wesentlichen bogenförmig durch die kraftführenden Bauteile geleitet und möglichst weit entfernt vom Fülllochrand in den Domdeckel eingeleitet werden. Der Fülllochrand erhält dabei keine zusätzliche Versteifung, sondern soll nach dem Stoß der Verformung des Domdeckels gefolgt sein, wobei die entstandenen Ebenheitsabweichungen einen kleinen Gradienten bezogen auf die Winkellage haben und durch die Elastizität der Dichtung aufgefangen werden. Druck- und Spannarm können dadurch vorteilhaft kurz gehalten und gleichzeitig die Krafteinleitungsstellen in den Domdeckel jeweils relativ weit entfernt von dem Fülllochrand platziert werden. Erfindungsgemäß ist also eine Ringzone um den Fülllochrand bei einem Druckstoß zugkraftfrei. Diese Ringzone ist aufgrund der schrägen Ableitung der Kraft aus dem Druckstoß in den Domdeckel verhältnismäßig breit. Auch nach dem Druckstoß wird dadurch noch die vorgeschriebene Dichtwirkung des Dichtsitzes gewährleistet. Die erfindungsgemäße Verschlussvorrichtung verfüllt dabei jederzeit die Anforderungen an die Betriebssicherheit. Gleichzeitig wird in einfach herstellbarer Weise eine geringe Bauhöhe und ein geringes Gewicht erreicht, da keine zusätzlichen Verstärkungen (Stringer o.ä.) erforderlich sind und aufwendige Herstellschritte entfallen können. Es sind also insbesondere keine zusätzlichen Versteifungselemente an dem Domdeckel oder Fülllochdeckel vorgesehen.

Es kann bei Auftreten eines auf die Verschlussvorrichtung wirkenden Druckstoßes zu einem ringförmigen metallischen Kontakt zwischen den ringförmigen Abschnitten und damit zu einer plastischen Verformung zumindest des Domdeckels im Bereich des metallischen Kontakts kommen. Bei Auftreten einer Druckspitze tritt ein metallischer Kontakt und eine plastische Verformung zumindest des Domdeckels auf. Der metallische Kontakt und gegebenenfalls die plastische Verformung können beispielsweise bei einem Druckstoß von 4 bar oder mehr, vorzugsweise von 5 bar oder mehr, auftreten. Im Gegensatz zum Stand der Technik, bei dem eine plastische Verformung zu vermeiden versucht wurde, wird diese gezielt in Kauf genommen. Die plastische Verformung ändert sich jedoch aufgrund der durch den metallischen Kontakt gewährleisteten umlaufenden Abstützung nur langsam. Es tritt also eine sanfte Verformung auf.

Die Grundfläche des Domdeckels bezeichnet in diesem Zusammenhang die Oberseite des Domdeckels außerhalb von möglicherweise im Randbereich des Domdeckels vorgesehenen Erhöhungen oder Abknickungen. Der metallische Kontakt besteht bei dieser Ausgestaltung also nicht im Bereich einer solchen möglicherweise vorgesehenen Erhöhung, insbesondere also nicht an einem Kragen, sondern im Bereich der Grundfläche. Der metallische Kontakt erfolgt vorzugsweise im Randbereich des Fülllochdeckels. Der ringförmige Dichtsitz befindet sich dann in Bezug auf den metallischen Kontaktbereich in radialer Richtung nach innen versetzt, also an der Innenseite des metallischen Kontaktbereichs.

Erfindungsgemäß wird eine möglichst steife "Brücke" realisiert. Mit Brücke sind die Bauteile bezeichnet, die die bei dem Druckstoß auf den Fülllochdeckel wirkenden Kräfte am Domdeckel abstützen, also der Fülllochdeckel (insbesondere der Fülllochdeckelrand), der Druck- und der Spannarm sowie eine ggf. vorgesehene Hülse, Lagerböcke, Unterlegplatten und/oder die zugehörigen Verbindungselemente (Bolzen, Schrauben etc.). Diese Bauteile bleiben bei dem Druckstoß vorzugsweise im Bereich der elastischen Verformung.

Der Domdeckel kann beispielsweise aus Aluminium bestehen. Auch der Fülllochdeckel kann aus Aluminium bestehen. Aluminium ist besonders leichtbauend und besitzt im Fall der für den Domdeckel verwendeten Legierung gleichzeitig eine hohe Bruchdehnung. Beispielsweise für den Fülllochdeckel sind aber auch Stahlwerkstoffe denkbar. Der Spann- und der Druckarm sind über insbesondere gegenüberliegend auf dem Domdeckel befestigte Lagerböcke auf dem Domdeckel abgestützt. Die Arme und die Lagerböcke können aus Stahl, beispielsweise höherfestem Baustahl (z.B. S355MC (1.0976), früher St 52) bestehen. Dieser zeichnet sich durch eine erhöhte Streckgrenze und einen erweiterten linearelastischen Bereich aus.

Der Druckstoß wirkt dabei von der Innenseite des Tanks nach außen auf den Domdeckel und den Fülllochdeckel. Der Domdeckel und/oder der Fülllochdeckel können eben oder beispielsweise konisch ausgebildet sein. Der Fülllochdeckel kann insbesondere zentral am Druckarm befestigt sein. In der Spannposition übt der Spannarm eine Spannkraft auf den Druckarm und damit auf den Fülllochdeckel aus. Der Kraftstofftank kann insbesondere für Tankfahrzeuge vorgesehen sein. Selbstverständlich kann der Tank mehrere separate Tankkammern aufweisen, die jeweils eine über eine erfindungsgemäße Verschlussvorrichtung verschließbare Einstiegsöffnung aufweisen. Die Einstiegsöffnung sowie das Füllloch und damit der Domdeckel und der Fülllochdeckel können in Draufsicht kreisförmig ausgebildet sein.

Gemäß einer bevorzugten Ausgestaltung ist der Federweg der Dichtung ausreichend groß, so dass auch bei einer aufgrund eines Druckstoßes auftretenden plastischen Verformung das Füllloch nach dem Druckstoß gegenüber dem Rand des Fülllochdeckels abgedichtet bleibt. Die Dichtung kann beispielsweise aus einem elastischen Kunststoff oder Gummi bestehen. Sie gleicht den durch die plastische Verformung aufgetretenen Ebenheitsfehler in der Fülllochdeckeldichtung aus. Während des Druckstoßes selbst ist dabei ein kurzzeitiges Öffnen der Dichtung zulässig.

Gemäß den nach den Normen EN 13314 und EN 13317 vorgeschriebenen Falltests kann der auftretende Druckstoß beispielsweise 5 bar oder mehr betragen. Die Verschlussvorrichtung kann also für einen derartigen Druckstoß ausgelegt sein. Bei einem solchen Druckstoß kommt es beispielsweise bei einer Fläche des Domdeckels von ca. 2.000 cm² zu einer Krafteinwirkung von 98 kN. Dies entspricht der von einem Gewicht von 10 Tonnen ausgeübten Gewichtskraft. Die entsprechend auftretende plastische Verformung kann im Bereich von wenigen Millimetern liegen. Der Spalt kann vor Auftreten des Druckstoßes eine Dicke von weniger als 2 mm, vorzugsweise weniger als 1 mm, besitzen.

Um die zugkraftfreie Ringzone um das Füllloch weiter zu vergrößern, können die Drehachsen des Druckarms und des Spannarms einen geringeren Abstand von dem Zentrum des Fülllochdeckels besitzen als die Anbindung der Lagerböcke an dem Domdeckel. Auf diese Weise erfolgt die beidseitige Krafteinleitung bei einem Druckstoß durch den Druckarm einerseits und den Spannarm andererseits weiter entfernt von dem Fülllochrand.

Nach einer weiteren Ausgestaltung ist es möglich, dass der Domdeckel zumindest in seinem das Füllloch begrenzenden Randbereich keinen Kragen aufweist. Bislang ist man davon ausgegangen, dass ein solcher Kragen die Steifigkeit der Verschlussvorrichtung erhöht. Erfindungsgemäß ist jedoch erkannt worden, dass bei Zulassen eines metallischen Kontakts und/oder einer (gesteuerten) plastischen Verformung verbesserte Eigenschaften der Verschlussvorrichtung beim Auftreten von Druckspitzen erreicht werden können.

Der Druckarm kann einteilig ausgebildet sein und ein in der Spannposition in Richtung des Domdeckels geöffnetes U-Profil sowie zumindest in dem mittleren Bereich seiner Längsseiten nach außen gerichtete Schenkel aufweisen. Es wird so eine flach bauende Ausgestaltung des Druckarms bei gleichzeitig hoher Steifigkeit erreicht. Der Druckarm kann vorzugsweise als Blechprägeteil hergestellt sein.

Der Fülllochdeckel kann über eine Hülse an dem Druckarm befestigt sein. Eine solche biegesteife Hülse kann beispielsweise aus Aluminium bestehen, wodurch ein geringes Gewicht ermöglicht wird. Die Hülse überträgt die bei einem Druckstoß wirkende Kraft über eine möglichst große Fläche in den Druckarm. Sie kann dazu rotationssymmetrisch ausgebildet sein, und vorzugsweise ein Kegelstumpfprofil aufweisen. Die kraftübertragende Fläche kann so vergrößert werden. Die beispielsweise als Schmiedeteil gefertigte Hülse kann an der zentralen Befestigung des Fülllochdeckels an dem Druckarm angeordnet sein.

Nach einer weiteren Ausgestaltung kann der Fülllochdeckel in axialer Richtung steif mit dem Druckarm verbunden sein, wobei eine Kippbewegung des Fülllochdeckels jedoch möglich ist. Der Fülllochdeckel ist vorzugsweise rotationssymmetrisch, insbesondere kreisförmig, ausgebildet. Die steife Verbindung besteht dann in Richtung seiner Rotationssymmetrieachse (z-Richtung). Dabei kann eine geringe Schwenkbewegung des Fülllochdeckels um eine radiale Achse erlaubt sein, so dass durch den Fülllochdeckel eine gleichmäßige Anpresskraft in der Schließposition gewährleistet ist.

Nach einer alternativen Ausgestaltung kann der Fülllochdeckel in axialer Richtung federnd mit dem Druckarm verbunden sein, wobei der Federweg durch einen Anschlag begrenzt ist. Dieser Anschlag überträgt die durch den Druckstoß erzeugten Kräfte. Er kann insbesondere zwischen dem Fülllochdeckel und der Hülse gebildet sein. Durch die federnde Verbindung kann oberhalb eines Ansprechdrucks ein innerhalb des Tanks bestehender Überdruck durch Entlüften begrenzt werden (Notentlüftung).

Zwischen dem Spannarm und dem Druckarm kann ein Bolzen zum Übertragen der bei einem Druckstoß auftretenden Kräfte vorgesehen sein, wobei der Spannarm eine in der Spannposition auf dem Bolzen aufliegende Lasche aufweist, die den Bolzen vorzugsweise über die gesamte Länge des Bolzens gegen eine Durchbiegung stützt.

Auch kann der Spannarm eine Anschlagkontur aufweisen, die mit einem im Bereich der Lagerung des Spannarms an dem Domdeckel vorgesehenen Anschlagbolzen als Anschlag derart zusammenwirkt, dass ein Kontakt zwischen dem Spannarm und dem Rand des Fülllochdeckels sowie einem etwaigen Kragen im Fall eines versenkten Einbaus der Einsteigöffnung jederzeit verhindert wird. Auf diese Weise wird auch eine versehentliche Kollision zwischen Spannarm und Fülllochdeckelrand sicher vermieden. Die Kontur bildet einen Endanschlag und kann im Bereich der seitlichen Laschen des Spannarms vorgesehen sein. Durch den Bolzen wird der Schwenkbereich des Spannarms in beide Schwenkrichtungen begrenzt. Er kann beispielsweise im den Spannarm am Domdeckel abstützenden Lagerbock angeordnet sein.

Nach einer weiteren Ausgestaltung kann vorgesehen sein, dass im Bereich der Abstützung der Lagerböcke auf dem Domdeckel auf der den Lagerböcken abgewandten Seite des Domdeckels vorzugsweise dreleckförmige Unterlegplatten vorgesehen sind. Es sind also einfache Unterlegplatten vorgesehen, die die bei einem Druckstoß auftretenden Zugkräfte großflächig in den Domdeckel weiterleiten, und zwar gezielt zu vorzugsweise mindestens zwei Verschraubungsstellen an dessen Rand, so dass die zusätzliche Verformung des Domdeckels aufgrund der Druckkraft aus dem Fülllochdeckel möglichst klein ist und ein Kippen des Spann- oder Druckarms um ihre Längsrichtung vermieden wird. Insbesondere wenn der Fülllochdeckel außermittig zum Domdeckel angeordnet ist, ist eine im Wesentlichen dreieckige Kontur der Unterlegplatten vorteilhaft für eine gute Abstützung.

Ein Ausführungsbeispiel der Erfindung wird nachfolgend anhand von Figuren näher erläutert. Es zeigen schematisch:
- Fig. 1: eine erfindungsgemäße Verschlussvorrichtung in einer Draufsicht,
- Fig. 2: die in Fig. 1 dargestellte Verschlussvorrichtung in einem Querschnitt entlang der Linie A-A in Fig. 1,
- Fig. 3: einen vergrößerten Ausschnitt der in Fig. 2 dargestellten Verschlussvorrichtung in einem Querschnitt in einer ersten Betriebsposition,
- Fig. 4: den in Fig. 3 dargestellten Ausschnitt in einer zweiten Betriebsposition, und
- Fig. 5: einen Querschnitt einer erfindungsgemäßen Verschlussvorrichtung gemäß einem weiteren Ausführungsbeispiel.

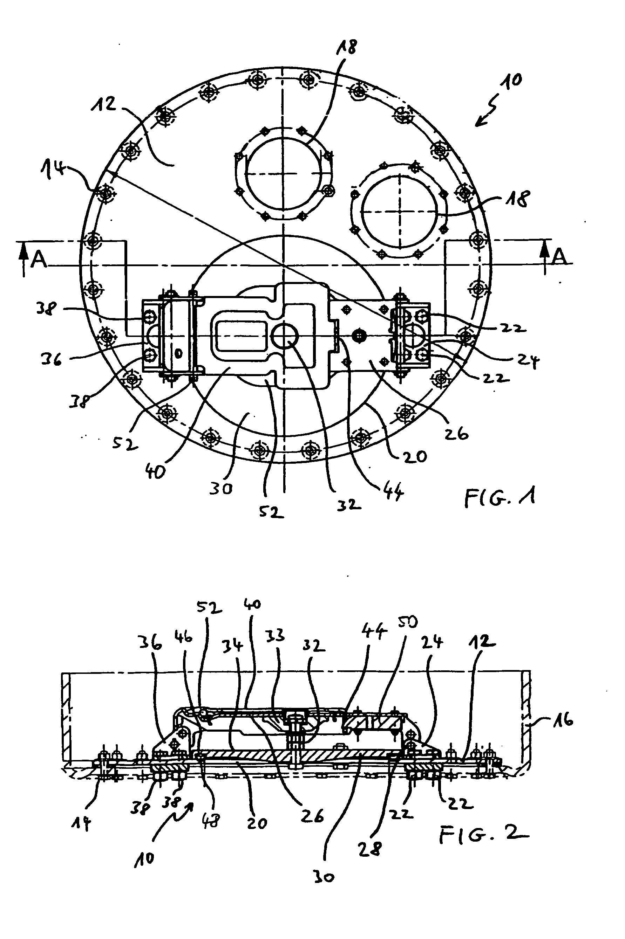

Soweit nichts anderes angegeben ist, bezeichnen gleiche Bezugszeichen in den Figuren gleiche Gegenstände. In Fig. 1 ist eine erfindungsgemäße Verschlussvorrichtung 10 für eine Einstiegsöffnung eines ortsbeweglichen Kraftstofftanks, vorliegend eines Kraftstofftanks eines Tankfahrzeugs, dargestellt. Die Verschlussvorrichtung 10 besitzt einen metallischen Domdeckel 12 zum Verschließen der Einstiegsöffnung, der in dem dargestellten Beispiel aus einem Aluminiumblech hoher Bruchdehnung besteht. Entlang seines kreisförmigen Randes weist der Domdeckel 12 eine Vielzahl von Bohrungen 14 zum Verschrauben des Domdeckels mit einem in Fig. 2 beispielhaft dargestellten Kragen 16 auf, der wiederum mit einer nicht dargestellten Tankwand verschweißt wird. Der Domdeckel 12 besitzt außerdem zwei Flanschöffnungen 18, an denen weitere Armaturen, beispielsweise Gaspendeleinrichtungen oder ähnliches, befestigt werden können. Darüber hinaus weist der Domdeckel 12 ein kreisförmiges Füllloch 20 zum Befüllen des Tanks auf. Außerdem ist ein mit dem Domdeckel 12 über Verschraubungen 22 verschraubter Lagerbock 24 vorgesehen, über den ein Druckarm 26 schwenkbar an dem Domdeckel 12 gelagert ist. Die schwenkbare Lagerung erfolgt über einen Bolzen 28 als Drehpunkt. Zentral an dem Druckarm 26 ist ein metallischer Fülllochdeckel 30 mittels einer Verschraubung 32 befestigt. Dabei wird die Verbindung zwischen dem Druckarm 26 und dem Fülllochdeckel 30 über eine kegelstumpfförmige Hülse 33 aus Aluminium vermittelt. Der Fülllochdeckel 30 besteht in dem dargestellten Beispiel aus einem Aluminium hoher Bruchdehnung. Er ist in der Draufsicht kreisförmig und besitzt eine ebene Oberseite 34. Der Druckarm kann zwischen einer in den Figuren nicht dargestellten aufgeschwenkten Befüllposition, in der der Fülllochdeckel 30 die Füllöffnung 20 freigibt und der in den Figuren dargestellten Schließposition, in der der Fülllochdeckel 30 das Füllloch 20 verschließt, verschwenkt werden. Ein zweiter Lagerbock 36 ist gegenüberliegend dem ersten Lagerbock 24 über Verschraubungen 38 mit dem Domdeckel 12 verbunden. An dem Lagerbock 36 ist ein Spannarm 40 über einen Bolzen 42 als Drehpunkt schwenkbar gelagert. Dabei kann der Spannarm 40 aus einer nicht gezeigten aufgeschwenkten Position in die in den Figuren dargestellte Spannposition verschwenkt werden, in der der Spannarm 40 mittels der Kontaktgeometrie zwischen Bolzen 53 und der berührenden Ebene am Druckarm 26 verrastet und diesen so unter Spannung in der Schließposition hält. Das Fallenschloss 44 ist eine zusätzliche Sicherheit gegen unbeabsichtigtes Aufschwenken des Spannarms 40, z.B. durch tiefhängende und sich verfangende Zweige im Fall einer aufgesetzten, offenen Installation der Vorrichtung. Das Fallenschloss 44 hält den Spannarm 40 auch bei Auftreten eines Druckstoßes in der Spannposition. Durch ein günstig gewähltes Hebelverhältnis können die am Fallenschloss 44 auftretenden Kräfte dabei gering gehalten werden.

Weiterhin ist im Randbereich des Fülllochdeckels 30 eine ringförmige Ausnehmung 46 eingebracht, in die als umlaufende elastische Dichtung 48 ein Dichtring 48, vorliegend aus einem elastischen Material, eingesetzt ist. Diese elastische Dichtung 48 stellt in der dargestellten Schließposition des Druckarms und der Spannposition des Spannarms einen Dichtsitz zwischen dem Rand des Fülllochdeckels 30 und dem Füllloch 20 bereit. Der Domdeckel 12 besitzt dabei in seinem das Füllloch 20 begrenzenden Randbereich keinen Kragen. Der Domdeckel 12 ist vielmehr eben ausgebildet.

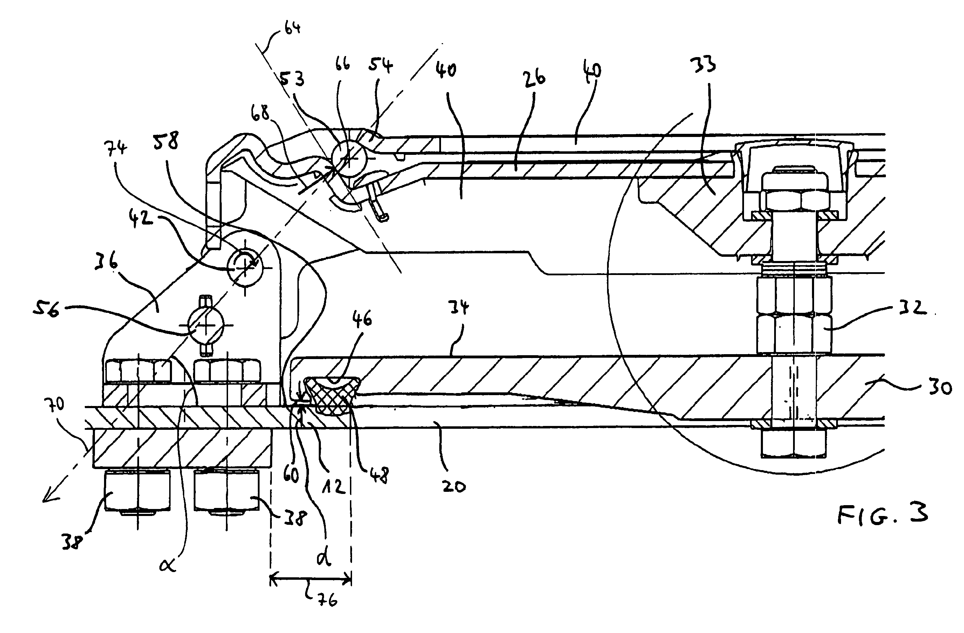

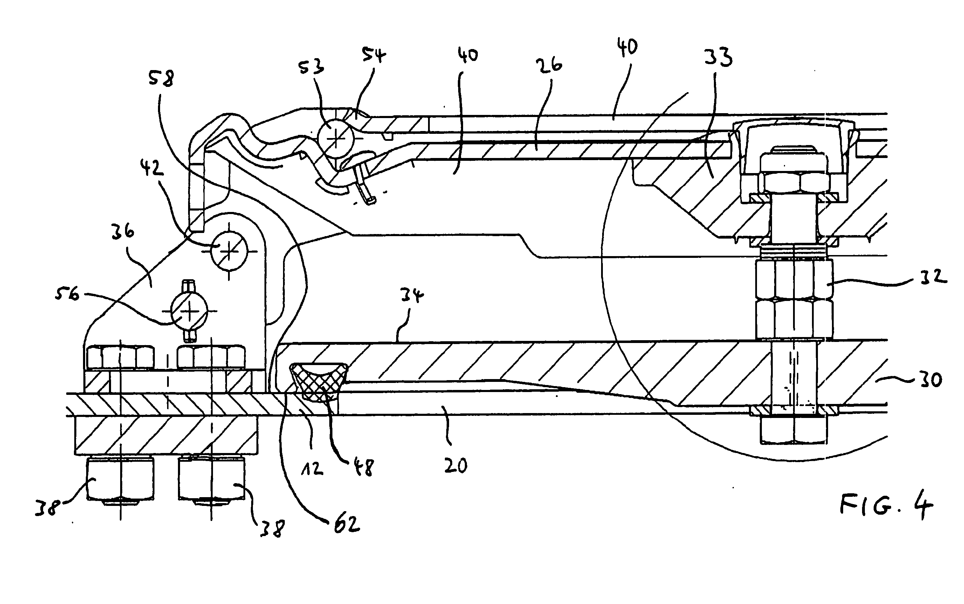

Der Druckarm 26 besitzt ein teilweise U-förmiges Profil 50, das in der in Fig. 2 gezeigten Ansicht nach unten geöffnet ist. In dem mittleren Bereich seiner Längsseiten besitzt der Druckarm 26 darüber hinaus nach außen gerichtete Schenkel 52. Weiterhin ist mindestens ein Bolzen 53 zwischen Spannarm 40 und Druckarm 26 vorgesehen. Dieser beispielsweise in den Fig. 3 und 4 zu erkennende Bolzen 53 dient zum Übertragen der bei einem Druckstoß auftretenden Kräfte. Der Spannarm 40 besitzt eine über die gesamte Länge des Bolzens 53 in der Spannposition auf dem Bolzen 53 aufliegende Lasche 54, die den Bolzen 53 gegen Durchbiegung stützt. Außerdem weist der Spannarm 40 eine nicht näher dargestellte Anschlagkontur auf, die mit einem in dem Lagerbock 36 geführten Anschlagbolzen 56 als Anschlag zusammenwirkt. Durch diesen Anschlag 56 wird ein Kontakt zwischen dem Spannarm 40 und dem Rand des Fülllochdeckels 30 jederzeit sicher verhindert.

Wie insbesondere in Fig. 3 zu erkennen ist, besteht in der dargestellten Schließposition des Fülllochdeckels 30 sowie der Spannposition des Spannarms 40 vor Auftreten eines Druckstoßes ein Spalt 60 geringer Dicke d zwischen einem ringförmigen Abschnitt des Fülllochdeckels 30 und einem gegenüberliegenden ebenfalls ringförmigen Abschnitt der Grundfläche 58 des Domdeckels 12. Bei Auftreten eines von der Tankinnenseite, in Fig. 3 also von unten auf den Fülllochdeckel 30 wirkenden Druckstoßes von beispielsweise 5 bar, wird eine durch den Druckstoß bewirkte und über die Verschraubung 32 in den Druckarm 26 eingeleitete Kraft über eine entlang der in Fig. 3 zur Veranschaulichung eingezeichnete Ebene 64 verlaufende Kontaktfläche 66 zwischen dem Druckarm 26 und dem Spannarm 40 unter anderem auf den Spannarm 40 übertragen. Die die Kontaktfläche 66 enthaltende Ebene 64 verläuft schräg nach außen und oben von dem Fülllochdeckel 30 weg. Dabei wirkt auf den Spannarm 40 eine Kraft in Richtung des in Fig. 3 zur Veranschaulichung eingezeichneten Pfeils 68, senkrecht zu der Kontaktfläche 66. Außerdem wird die durch den Druckstoß bewirkte Kraft aus dem Druckarm 26 über die Kontaktfläche 64, den Bolzen 53 und den Spannarm 40 entlang der in Fig. 3 strichpunktiert dargestellten Hauptkraftableitungsrichtung 70 über den Lagerbock 36 des Spannarms 40 in den Domdeckel 12 eingeleitet. Diese Hauptkraftableitungsrichtung 70 verläuft unter einem Winkel α von etwa 45° zu der durch die Oberseite des Fülllochs 20 aufgespannten Ebene 72, die gleichzeitig die Horizontale ist. Die Hauptkraftableitungsrichtung 70 verläuft ausgehend von der Kontaktfläche 64 nach außen und nach unten in den Domdeckel 12. Dabei wird ein Selbsthaltemoment durch die Richtung der Ebene 64 bewirkt. Insbesondere wirkt durch die Kraft auf den den Spannarm 40 drehbar lagernden Bolzen 42 ein Drehmoment in Richtung des Pfeils 74 in Fig. 3, welches selbstverstärkend auf den Spannarm 40 wirkt, so dass dieser in seiner Spannposition gehalten wird. Auf der in Fig. 3 nicht dargestellten gegenüberliegenden Seite verläuft eine Hauptableitungsrichtung der von dem Fülllochdeckel 30 in den Druckarm 26 und von diesem direkt über den Lagerbock 24 in den Domdeckel 12 eingeleiteten Kraft gespiegelt zu der Ableitungsrichtung 70, also ebenfalls schräg, insbesondere unter einem Winkel von 45° zur Fülllochebene nach außen und nach unten in den Domdeckel 12. Durch die beidseitige schräg nach außen gerichtete Kraftableitung in den Domdeckel 12 ergibt sich um den Fülllochrand herum eine verhältnismäßig breite Ringzone 76, die bei dem Druckstoß ohne Zugkraftbelastung bleibt. Die Lagerböcke 24, 36 können über in den Figuren nicht näher dargestellte vorzugsweise dreieckförmige Unterlegplatten auf dem Domdeckel 12 abgestützt sein. Dies verbessert die Krafteinleitung.

Außerdem kann sich bei einem Druckstoß der Spalt 60 durch die aufgrund des Druckstoßes wirkenden Kräfte schließen und es kann zu einem ringförmigen metallischen Kontakt 62 zwischen den gegenüberliegenden, den Spalt 60 begrenzenden ringförmigen Abschnitten des Fülllochdeckels 30 und des Domdeckels 12 kommen. Dies ist in Fig. 4 schematisch veranschaulicht. Weitere bei dem Druckstoß gegebenenfalls auftretende Verformungen der Verschlussvorrichtung sind dabei der Einfachheit halber nicht gezeigt. Gleichzeitig kann es über den metallischen Kontakt zu einer (nicht dargestellten) plastischen Verformung des Domdeckels 12 im Bereich des metallischen Kontakts 62 kommen. Der Federweg der elastischen Dichtung 48 ist dabei allerdings ausreichend groß, so dass auch bei einer solchen auftretenden plastischen Verformung nach dem Druckstoß das Füllloch 20 gegenüber dem Rand des Fülllochdeckels 30 sicher abgedichtet bleibt.

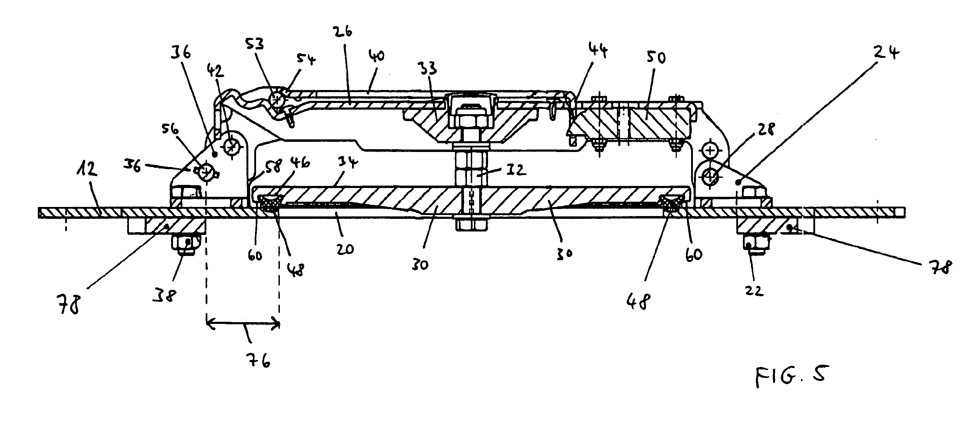

Fig. 5 zeigt eine Querschnittsansicht entsprechend der Fig. 2 für eine Verschlussvorrichtung nach einem weiteren erfindungsgemäßen Ausführungsbeispiel. Diese Verschlussvorrichtung entspricht weitgehend der in den Figuren 1 bis 4 gezeigten Verschlussvorrichtung und gleiche Gegenstände sind mit gleichen Bezugszeichen gekennzeichnet. Während die Lagerböcke 24, 36 bei dem Ausführungsbeispiel nach den Fig. 1 bis 4 jeweils über vier Verschraubungen 22, 38 an dem Domdeckel 12 verschraubt sind, sind die Lagerböcke 24, 36 bei der Vorrichtung nach Fig. 5 jeweils nur über zwei seitlich benachbarte Verschraubungen 22, 38 an dem Domdeckel 12 verschraubt (in die Zeichenebene in Fig. 5 hinein hintereinander angeordnet). Insbesondere verzichtet die Vorrichtung nach Fig. 5 auf die in radialer Richtung inneren Verschraubungen aus den Fig. 1 bis 4. Die Anbindung der Lagerböcke 24, 36 an den Domdeckel 12 liegt also weiter außen als bei den Figuren 1 bis 4. Dadurch wird die zugkraftfreie Ringzone 76 in vorteilhafter Weise vergrößert. Im Übrigen entsprechen die bei der Vorrichtung nach Fig. 5 bei einem Druckstoß auftretenden Kräfteverhältnisse weitgehend den in Fig. 3 beispielhaft eingezeichneten Verhältnissen der Vorrichtung nach den Fig. 1 bis 4 und werden daher an dieser Stelle nicht nochmals erläutert. Außerdem weist die Vorrichtung nach Fig. 5 im Bereich der Abstützung der Lagerböcke 24, 36 auf dem Domdeckel 12 auf der den Lagerböcken 24, 36 abgewandten Seite des Domdeckels 12 Unterlegplatten 78 auf, die in dem Beispiel in Fig. 5 dreieckförmig sind. Diese leiten bei einem Druckstoß auftretenden Zugkräfte großflächig in den Domdeckel 12 und insbesondere in die Verschraubungsstellen 22, 38 an dessen Rand ein. Die zusätzliche Verformung des Domdeckels 12 aufgrund der Druckkraft aus dem Fülllochdeckel ist daher klein und ein Kippen des Spann- oder Druckarms um die jeweilige Längsrichtung wird sicher vermieden.

Obgleich in dem in den Figuren gezeigten Ausführungsbeispiel eine Verschlussvorrichtung ohne ein Notentlastungsventil dargestellt ist, ist die Erfindung selbstverständlich in analoger Weise auch bei Verschlussvorrichtungen mit einem solchen Notentlastungsventil anwendbar. Derartige federbelastete Notentlastungsventile dienen dazu, beispielsweise bei einem Brand in dem Tank eine Explosion zu verhindern, indem über das Ventil eine temporäre Entlüftung des Tanks erfolgen kann.

Mit der erfindungsgemäßen Verschlussvorrichtung wird in einfach herstellbarer Weise und bei geringem Gewicht und geringer Baugröße jederzeit die Einhaltung der sicherheitsrelevanten Vorschriften gewährleistet.

## Patentansprüche

1. Verschlussvorrichtung für eine Einstiegsöffnung eines ortsbeweglichen Kraftstofftanks, umfassend:
- einen metallischen Domdeckel (12) zum Verschließen der Einsfiegsöffnung,
- ein Füllloch (20) in dem Domdeckel (12) zum Befüllen des Tanks,
- einen schwenkbar an dem Domdeckel (12) gelagerten Druckarm (26), wobei an dem Druckarm (26) ein metallischer Fülllochdeckel (30) befestigt ist, und wobei der Druckarm (26) zwischen einer Schließposition, in der der Fülllochdeckel (30) das Füllloch (20) verschließt, und einer Befüllposition, in der der Fülllochdeckel (30) das Füllloch (20) freigibt, verschwenkt werden kann,
- einen ebenfalls schwenkbar an dem Domdeckel (12) gelagerten Spannarm (40), der bei in Schließposition befindlichem Druckarm (26) in eine Spannposition verschwenkt werden kann, in der der Spannarm (40) mit dem Druckarm (26) verrastet und diesen so in der Schließposition hält,
- wobei der Druckarm (26) und der Spannarm (40) über gegenüberliegend auf dem Domdeckel (12) befestigte Lagerböcke (24, 36) auf dem Domdeckel (12) abgestützt sind, und
- eine umlaufende elastische Dichtung (48), die in der Schließposition des Druckarms (26) einen Dichtsitz zwischen dem Rand des Fülllochdeckels (30) und dem Füllloch (20) bereitstellt,
- wobei in der Schließposition zwischen einem ringförmigen Abschnitt des Fülllochdeckels (30) und einem gegenüberliegenden ringförmigen Abschnitt der Grundfläche (58) des Domdeckels (12) ein Spalt (60) besteht,
- **dadurch gekennzeichnet, dass** bei Auftreten eines von der Tankinnenseite auf die Verschlussvorrichtung (10) wirkenden Druckstoßes eine aufgrund des Druckstoßes über den Fülllochdeckel (30) auf den Druckarm (26) und den Spannarm (40) wirkende Kraft von diesen jeweils schräg nach außen in den Domdeckel (12) eingeleitet wird.

2. Verschlussvorrichtung nach Anspruch 1, **dadurch gekennzeichnet, dass** eine Kontaktfläche (64) zwischen dem Druckarm (26) und dem Spannarm (40) so gewählt ist, dass bei Auftreten eines von der Tankinnenseite auf die Verschlussvorrichtung (10) wirkenden Druckstoßes ein Selbsthaltemoment des Spannarms (40) in seine Spannposition bewirkt wird.

3. Verschlussvorrichtung nach Anspruch 1 oder Anspruch 2, **dadurch gekennzeichnet, dass** die auf den Druckarm (26) und den Spannarm (40) wirkende Kraft von diesen im Wesentlichen entlang einer in einem Winkel von etwa 45° zu der Ebene des Fülllochs (20) verlaufenden Kraftableitungsrichtung (70) in den Domdeckel (12) abgeleitet wird.

4. Verschlussvorrichtung nach einem der vorhergehenden Ansprüche, **dadurch gekennzeichnet, dass** zumindest der Druckarm (26) und der Spannarm (40) sowie die Lagerböcke (24, 36) entlang der Richtung der von dem Druckarm (26) in den Domdeckel (12) eingeleiteten Kraft angeordnet sind.

5. Verschlussvorrichtung nach einem der vorhergehenden Ansprüche, **dadurch gekennzeichnet, dass** es bei Auftreten eines von der Tankinnenseite auf die Verschlussvorrichtung (10) wirkenden Druckstoßes zu einem ringförmigen metallischen Kontakt (62) zwischen den ringförmigen Abschnitten und damit zu einer plastischen Verformung zumindest des Domdeckels (12) im Bereich des metallischen Kontakts (62) kommen kann.

6. Verschlussvorrichtung nach einem der vorhergehenden Ansprüche, **dadurch gekennzeichnet, dass** der Federweg der Dichtung (48) ausreichend groß ist, so dass auch bei einer aufgrund eines Druckstoßes von der Tankinnenseite auftretenden plastischen Verformung zumindest des Domdeckels (12) das Füllloch (20) nach dem Druckstoß gegenüber dem Rand des Fülllochdeckels (30) abgedichtet bleibt.

7. Verschlussvorrichtung nach einem der vorhergehenden Ansprüche, **dadurch gekennzeichnet, dass** sie für einen Druckstoß von der Tankinnenseite on mindestens 5 bar ausgelegt ist.

8. Verschlussvorrichtung nach einem der vorhergehenden Ansprüche, **dadurch gekennzeichnet, dass** die Drehachsen des Druckarms (26) und des Spannarms (40) einen geringeren Abstand von dem Zentrum des Fülllochdeckels (30) besitzen als die Anbindung der Lagerböcke (24, 36) an dem Domdeckel (12).

9. Verschlussvorrichtung nach einem der vorhergehenden Ansprüche, **dadurch gekennzeichnet, dass** der Domdeckel (12) zumindest in seinem das Füllloch (20) begrenzenden Randbereich keinen Kragen aufweist.

10. Verschlussvorrichtung nach einem der vorhergehenden Ansprüche, **dadurch gekennzeichnet, dass** der Druckarm (26) einteilig ausgebildet ist und ein in der Spannposition in Richtung des Domdeckels (12) geöffnetes U-Profil (50) sowie zumindest in dem mittleren Bereich seiner Längsseiten nach außen gerichtete Schenkel (52) aufweist.

11. Verschlussvorrichtung nach einem der vorhergehenden Ansprüche, **dadurch gekennzeichnet, dass** der Fülllochdeckel (30) über eine Hülse (33) an dem Druckarm (26) befestigt ist.

12. Verschlussvorrichtung nach Anspruch 11, **dadurch gekennzeichnet, dass** die Hülse (33) rotationssymmetrisch ausgebildet ist, und vorzugsweise ein Kegelstumpfprofil aufweist.

13. Verschlussvorrichtung nach einem der vorhergehenden Ansprüche, **dadurch gekennzeichnet, dass** der Fülllochdeckel (30) in axialer Richtung steif mit dem Druckarm (26) verbunden ist, wobei eine Kippbewegung des Fülllochdeckels (30) möglich ist.

14. Verschlussvorrichtung nach einem der Ansprüche 1 bis 12, **dadurch gekennzeichnet, dass** der Fülllochdeckel (30) in axialer Richtung federnd mit dem Druckarm (26) verbunden ist, wobei der Federweg durch einen Anschlag begrenzt ist.

15. Verschlussvorrichtung nach einem der vorhergehenden Ansprüche, **dadurch gekennzeichnet, dass** ein Bolzen (53) zwischen Spannarm (40) und Druckarm (26) zum Übertragen der bei einem Druckstoß von der Tankinnenseite zwischen Spannarm (40) und Druckann (26) auftretenden Kräfte vorgesehen ist und, dass der Spannarm (40) eine in der Spannposition auf dem Bolzen (53) aufliegende Lasche (54) aufweist, die den Bolzen (53) gegen Durchbiegung stützt.

16. Verschlussvorrichtung nach einem der vorhergehenden Ansprüche, **dadurch gekennzeichnet, dass** im Bereich der Abstützung der Lagerböcke (24, 36) auf dem Domdeckel (12) auf der den Lagerböcken (24, 36) abgewandten Seite des Domdeckels (12) vorzugsweise dreieckförmige Unterlegplatten vorgesehen sind.

17. Verschlussvorrichtung nach einem der vorhergehenden Ansprüche, **dadurch gekennzeichnet, dass** der Spannarm (40) eine Anschlagkontur aufweist, die mit einem im Bereich der Lagerung des Spannarms (40) an dem Domdeckel (12) vorgesehenen Anschlagbolzen (56) als Anschlag derart zusammenwirkt, dass ein Kontakt zwischen dem Spannarm (40) und dem Rand des Fülllochdeckels (30) sowie einem gegebenenfalls vorgesehenen Kragen (16) der Einstiegsöffnung jederzeit verhindert wird.

## Claims

1. A closure device for an entry opening of a portable fuel tank, comprising:
- a metallic dome cover (12) for closing the entry opening,
- a fill hole (20) in the dome cover (12) for filling the tank,
- a pressure arm (26) rotatably mounted on the dome cover (12), wherein a metallic fill hole cover (30) is fastened on the pressure arm (26), and wherein the pressure arm (26) can be moved between a close position, in which the fill hole cover (30) closes the fill hole (20), and a fill position, in which the fill hole cover (30) releases the fill hole (20),
- a tensioning arm (40) also rotatably mounted on the dome cover (12), which can be moved into a tensioning position when the pressure arm (26) is located in the close position, in which the tensioning arm (40) locks with the pressure arm (26) and thus holds it in the closed position,
- wherein the pressure arm (26) and the tensioning arm (40) are supported on the dome cover (12) via bearing blocks (24, 36) fastened oppositely on the dome cover (12) and
- a circumferential elastic seal (48), which in the closed position of the pressure arm (26) provides a seal seat between the border of the fill hole cover (30) and the fill hole (20),
- wherein in the closed position between an annular section of the fill hole cover (30) and an opposite-lying annular section of the base area (58) of the dome cover (12) there is a gap (60),
- **characterized in that** in the case of the occurrence of a pressure surge acting from the inside of the tank on the closure device (10) a force acting on the pressure arm (26) and the tensioning arm (40) due to the pressure surge via the fill hole cover (30) can be directed from each of them respectively slopingly outward into the dome cover (12).

2. The closure device according to claim 1, **characterized in that** a contact surface (64) between the pressure arm (26) and the tensioning arm (40) is selected such that upon occurrence of a pressure surge acting from the inside of the tank on the closure device (10) a self-holding torque of the tensioning arm (40) into its tensioning position is caused.

3. The closure device according to claim 1 or claim 2, **characterized in that** the force acting on the pressure arm (26) and the tensioning arm (40) is dissipated from them mainly along a force dissipation direction (70) running at an angle of approximately 45° to the plane of the fill hole (20) into the dome cover (12).

4. The closure device according one of the previous claims, **characterized in that** at least the pressure arm (26) and the tensioning arm (40) as well as the bearing blocks (24, 36) are arranged along the direction of the force directed from the pressure arm (26) into the dome cover (12).

5. The closure device according to one of the previous claims, **characterized in that** an annular, metallic contact (62) between the annular sections and thus a plastic deformation at least of the dome cover (12) can result in the area of the metallic contact (62) during the occurrence of a pressure surge acting from the inside of the tank on the closure device (10).

6. The closure device according to one of the previous claims, **characterized in that** the spring travel of the seal (48) is sufficiently large so that, in the case of a plastic deformation of at least the dome cover (12) occurring due to a pressure surge from the inside of the tank, the fill hole (20) also remains sealed after the pressure surge with respect to the border of the fill hole cover (30).

7. The closure device according to one of the previous claims, **characterized in that** it is designed for a pressure surge from the inside of the tank of at least 5 bar.

8. The closure device according to one of the previous claims, **characterized in that** the rotational axes of the pressure arm (26) and the tensioning arm (40) can have a smaller distance from the center of the fill hole cover (30) than the connection of the bearing blocks (24, 36) on the dome cover (12).

9. The closure device according to one of the previous claims, **characterized in that** the dome cover (12) has no collar at least in its border area bordering the fill hole (20).

10. The closure device according to one of the previous claims, **characterized in that** the pressure arm (26) can be designed as one piece and have a U profile (50) open in the tensioning position in the direction of the dome cover (12) as well as outward pointing legs (52) at least in the middle area of its longitudinal sides.

11. The closure device according to one of the previous claims, **characterized in that** the fill hole cover (30) is fastened on the pressure arm (26) via a sheath (33).

12. The closure device according claim 11, **characterized in that** the sheath (33) is designed rotationally symmetrical and preferably has a truncated conical profile.

13. The closure device according to one of the previous claims, **characterized in that** the fill hole cover (30) can be connected rigidly with the pressure arm (26) in the axial direction, wherein a tipping movement of the fill hole cover (30) is possible.

14. The closure device according to one of the claims 1 through 12, **characterized in that** the fill hole cover (30) is connected in a resilient manner with the pressure arm (26) in the axial direction, wherein the spring travel is limited by a stop.

15. The closure device according to one of the previous claims, **characterized in that** a bolt (53) is provided between tensioning arm (40) and pressure arm (26) for transferring the forces occurring during a pressure surge from the inside of the tank between tensioning arm (40) and pressure arm (26) and **in that** the tensioning arm (40) has a butt strap lying on the bolt (53) in the tensioning position, which supports the bolt (53) against bending.

16. The closure device according to one of the previous claims, **characterized in that** triangular spacers are provided in the area of the support of the bearing blocks (24, 36) on the dome cover (12) on the side of the dome cover (12) facing away from the bearing blocks (24, 36).

17. The closure device according to one of the previous claims, **characterized in that** the tensioning arm (40) has a stop contour, which works together with a stop bolt (56) as a stop provided in the area of the mounting of the tensioning arm (40) at the dome cover (12) such that a contact between the tensioning arm (40) and the border of the fill hole cover (30) as well as a potentially provided collar (16) of the entry opening is prevented at all times.

## Revendications

1. Dispositif de fermeture pour une ouverture d'entrée d'un réservoir de carburant déplaçable, comprenant :
un couvercle de dôme métallique (12) pour la fermeture de l'ouverture d'entrée,
un trou de remplissage (20) dans le couvercle de dôme (12) pour le remplissage du réservoir,
un bras de pression (26) monté de façon pivotante sur le couvercle de dôme (12), un couvercle métallique de trou de remplissage (30) étant fixé au bras de pression (26), et le bras de pression (26) pouvant être pivoté entre une position de fermeture, dans laquelle le couvercle de trou de remplissage (30) ferme le trou de remplissage (20), et une position de remplissage, dans laquelle le couvercle de trou de remplissage (30) dégage le trou de remplissage (20),
un bras de serrage (40) également monté de façon pivotante sur le couvercle de dôme (12), qui, lorsque le bras de pression (26) se trouve dans la position de fermeture, peut être pivoté dans une position de serrage dans laquelle le bras de serrage (40) s'engage avec le bras de pression (26) tout en maintenant celui-ci dans la position de fermeture,
dans lequel le bras de pression (26) et le bras de serrage (40) sont appuyés sur le couvercle de dôme (12) par des supports de palier (24, 36) fixés face à face sur le couvercle de dôme (12), et
un joint d'étanchéité élastique périphérique (48) fournissant un siège d'étanchéité entre le bord du couvercle de trou de remplissage (30) et le trou de remplissage (20) dans la position de fermeture du bras de pression (26),
dans lequel, dans la position de fermeture, un espacement (60) apparaît entre une partie annulaire du couvercle de trou de remplissage (30) et une partie annulaire opposée de la surface de base (58) du couvercle de dôme (12),
**caractérisé en ce que** lors d'un coup de bélier agissant sur le dispositif de fermeture (10) depuis le côté intérieur du réservoir, une force agissant sur le bras de pression (26) et le bras de serrage (40) par le biais du couvercle de trou de remplissage (30), en raison du coup de bélier, est respectivement transférée par ceux-ci au couvercle de dôme (12), de façon oblique et vers l'extérieur.

2. Dispositif de fermeture selon la revendication 1, **caractérisé en ce qu'**une surface de contact (64) entre le bras de pression (26) et le bras de serrage (40) est choisie de manière à ce qu'un coup de bélier agissant sur le dispositif de fermeture (10) depuis le côté intérieur du réservoir entraîne un couple de maintien automatique du bras de serrage (40) dans sa position de serrage.

3. Dispositif de fermeture selon la revendication 1 ou la revendication 2, **caractérisé en ce que** la force agissant sur le bras de pression (26) et le bras de serrage (40) est déviée par ceux-ci, vers le couvercle de dôme (12), essentiellement le long d'une direction de déviation de force (70) s'étendant selon un angle d'environ 45° par rapport au plan du trou de remplissage (20).

4. Dispositif de fermeture selon l'une des revendications précédentes, **caractérisé en ce qu'**au moins le bras de pression (26) et le bras de serrage (40) ainsi que les supports de palier (24, 36) sont agencés le long de la direction de la force introduite dans le couvercle de dôme (12) par le bras de pression (26).

5. Dispositif de fermeture selon l'une des revendications précédentes, **caractérisé en ce qu'**un coup de bélier agissant sur le dispositif de fermeture (10) depuis le côté intérieur du réservoir peut entraîner un contact métallique annulaire (62) entre les parties annulaires, et donc une déformation plastique au moins du couvercle de dôme (12), dans la région du contact métallique (62).

6. Dispositif de fermeture selon l'une des revendications précédentes, **caractérisé en ce que** le débattement du joint d'étanchéité (48) est suffisamment grand pour que, même avec une déformation plastique au moins du couvercle de dôme (12) due à un coup de bélier depuis le côté intérieur du réservoir, le trou de remplissage (20) reste étanche par rapport au bord du couvercle de trou de remplissage (30) après le coup de bélier.

7. Dispositif de fermeture selon l'une des revendications précédentes, **caractérisé en ce qu'**il est conçu pour un coup de bélier d'au moins 5 bar depuis le côté intérieur du réservoir.

8. Dispositif de fermeture selon l'une des revendications précédentes, **caractérisé en ce que** les axes de rotation du bras de pression (26) et du bras de serrage (40) présentent un espacement plus petit par rapport au centre du couvercle de trou de remplissage (30) que la fixation des supports de palier (24, 36) au couvercle de dôme (12).

9. Dispositif de fermeture selon l'une des revendications précédentes, **caractérisé en ce que** le couvercle de dôme (12) ne comporte pas de col, au moins dans sa région de bord délimitant le trou de remplissage (20).

10. Dispositif de fermeture selon l'une des revendications précédentes, **caractérisé en ce que** le bras de pression (26) est conçu d'une seule pièce et comporte un profil en U (50) ouvert dans la direction du couvercle de dôme (12) dans la position de serrage, ainsi que des branches (52) orientées vers l'extérieur, au moins dans la région centrale de ses côtés longitudinaux.

11. Dispositif de fermeture selon l'une des revendications précédentes, **caractérisé en ce que** le couvercle de trou de remplissage (30) est fixé au bras de pression (26) par une douille (33).

12. Dispositif de fermeture selon la revendication 11, **caractérisé en ce que** la douille (33) est conçue symétrique en rotation, et comporte de préférence un profil en cône tronqué.

13. Dispositif de fermeture selon l'une des revendications précédentes, **caractérisé en ce que** le couvercle de trou de remplissage (30) est relié inflexiblement au bras de pression (26) dans la direction axiale, tout en permettant un mouvement de bascule du couvercle de trou de remplissage (30).

14. Dispositif de fermeture selon l'une des revendications 1 à 12, **caractérisé en ce que** le couvercle de trou de remplissage (30) est relié de façon élastique au bras de pression (26) dans la direction axiale, le débattement étant délimité par une butée.

15. Dispositif de fermeture selon l'une des revendications précédentes, **caractérisé en ce qu'**un boulon (53) est prévu entre le bras de serrage (40) et le bras de pression (26), pour la transmission des forces apparaissant entre le bras de serrage (40) et le bras de pression (26) lors d'un coup de bélier depuis le côté intérieur du réservoir, et **en ce que** le bras de serrage (40) comporte une languette (54) appliquée sur le boulon (53) dans la position de serrage, pour empêcher le boulon (53) de se déformer.

16. Dispositif de fermeture selon l'une des revendications précédentes, **caractérisé en ce que** dans la région de l'appui des supports de palier (24, 36) sur le couvercle de dôme (12) du côté du couvercle de dôme (12) qui est détourné des supports de palier (24, 36), des plaques de base de préférence triangulaires sont prévues.

17. Dispositif de fermeture selon l'une des revendications précédentes, **caractérisé en ce que** le bras de serrage (40) présente un contour de butée coopérant de telle manière en tant que butée avec un boulon de butée (56) prévu dans la région de l'appui du bras de serrage (40) sur le couvercle de dôme (12), qu'un contact entre le bras de serrage (40) et le bord du couvercle de trou de remplissage (30) ainsi qu'un col (16) de l'ouverture d'entrée éventuellement prévu est empêché à tout moment.
